# EUROPÄISCHE PATENTSCHRIFT

(11) **EP 1 271 398 B1**
(45) Veröffentlichungstag und Bekanntmachung des Hinweises auf die Patenterteilung: **11.02.2004**
(21) Anmeldenummer: 02019605.1
(22) Anmeldetag: 11.07.2000
(51) Int. Cl.: G06K 19/077

(54) **Sicherheitsetikett/Sicherheitsanhänger mit darin integriertem RFID-Transponder**
Security label having a built-in RFID-transponder
Etiquette de sécurité ou attache de sécurité avec transpondeur RFID

(43) Veröffentlichungstag der Anmeldung: 02.01.2003
(62) Teilanmeldung aus: 00114819.6
(73) Patentinhaber: X-ident technology GmbH, 52355 Düren (DE)
(72) Erfinder: Robertz, Bernd, Dr., 52382 Niederzier-Hambach (DE); Liebler, Ralf, Dr., 52372 Kreuzau (DE)
(74) Vertreter: Sternagel, Fleischer, Godemeyer & Partner Patentanwälte

(56) Entgegenhaltungen:
- EP-A- 0 520 455
- EP-A- 0 999 532
- WO-A-93/12513

## Beschreibung

Gegenstand der Erfindung sind laminierte Sicherheitsetiketten oder Sicherheitsanhänger in die ein sogenannter RFID-Transponder integriert ist, deren mechanische Festigkeit so ausgebildet ist, daß ein Versuch, das Etikett bzw. den Anhänger vom vorgesehenen zu kennzeichnenden Gegenstand zu entfernen, eine irreversible Verformung und gleichzeitige Zerstörung der Funktionsfähigkeit des RFID-Transponders zur Folge hat.

Aus EP-A-520 455 ist ein Fluggepäckanhänger bekannt, in den ein RFID-Transponder derart integriert ist, daß beim Abtrennen eines zum Abtrennen vorbereiteten Abschnittes des Anhängers die Funktionsfähigkeit des RFID-Transponders beendet wird.

In WO 93-12 513 ist eine streifenförmige Verschlußsicherung mit einem integrierten RFID-Transponder beschrieben. Antenne und Chip sind auf dem Streifen derart räumlich voneinander getrennt angeordnet, daß beim Durchtrennen des Trägerstreifens die elektrische Verbindung zwischen Antenne und Chip unterbrochen wird. Diese Unterbrechung ist zwingend erforderlich um den RFID-Transponder funktionsunfähig zu machen.

Aus EP-A-670 563 ist ein mehrschichtiges Haftklebeetikett bekannt, welches einen elektronischen Resonanzschaltkreis aufweist. Die Spaltfestigkeit der Schichten ist so eingestellt, daß beim Ablösen des Etiketts der Schaltkreis zerstört wird.

Aufgabe der vorliegenden Erfindung ist es, ein "elektronisches Sicherheitsetikett" oder einen "elektronischen Sicherheitsanhänger" zu schaffen, bei dessen Entfernung von dem Platz der Verwendung der integrierte RFID-Transponder funktionsuntüchtig wird.

Diese Aufgabe wird durch ein mehrschichtiges Etikett gelöst, mit mindestens einer bedruckbaren Trägerschicht aus Papier mit einem Flächengewicht von 40 g/m² bis 250 g/m² und einer Weiterreißfestigkeit, gemessen nach Brecht-Imset, DIN 53115, von 250 bis 4000 mN, auf der zumindest eine Antenne und ein elektrisch damit verbundener Chip zur Ausbildung eines RFID-Transponders angeordnet sind und wobei auf der der bedruckbaren Oberfläche gegenüberliegenden Oberfläche der Trägerschicht eine erste Kleberschicht ausgebildet ist, deren Haftung auf einem zu kennzeichnenden Gegenstand derart ist, daß die zum Ablösen erforderliche Kraft größer ist als die mechanische Stabilität der Trägerschicht, so daß sich diese beim Versuch des Ablösens vom damit gekennzeichneten Gegenstand irreversibel verformt und dadurch die normale Funktionsfähigkeit des RFID-Transponders gestört und/oder zerstört wird.

Gemäß einer alternativen Ausführungsform wird die Aufgabe gelöst durch einen mehrschichtigen, streifenförmigen Sicherheitsanhänger mit einer bedruckbaren Trägerschicht aus Papier mit einem Flächengewicht von 40 g/m² bis 250 g/m² und mit einer Weiterreißfestigkeit, gemessen nach Brecht-Imset, DIN 53115, von 250 bis 4000 mN, auf der mindestens eine Antenne und ein elektrisch damit verbundener Chip zur Ausbildung eines RFID-Transponders in einem Endbereich des Trägerstreifens angeordnet sind und wobei auf der der bedruckbaren Oberfläche der Trägerschicht gegenüberliegenden Oberfläche eine erste Kleberschicht ausgebildet ist, deren Haftung mit sich selbst an einer anderen Stelle des Anhängerstreifens derart ist, daß die zum Ablösen erforderliche Kraft größer ist als die mechanische Stabilität der Trägerschicht, so daß sich diese beim Versuch des Ablösens vom damit gekennzeichneten Gegenstand irreversibel verformt und dadurch die normale Funktionsfähigkeit des RFID-Transponders gestört und/oder zerstört wird.

Irreversible Verformung im Sinne der vorliegenden Erfindung schließt auch Einreißen und/oder Durchreißen des Trägermaterials ein.

Als Trägerschicht zur Ausbildung eines RFID-Transponders werden Papiere mit einem Flächengewicht von 40 g/m² bis 250 g/m² verwendet, deren Weiterreißfestigkeit (Weiterreißarbeit), gemessen nach Brecht-Imset (DIN 53115) von 250 bis 4000 mN beträgt.
Die Weiterreißarbeit ist die Arbeit, die nach Einriß zum Weiterreißen der Probe aufgewendet werden muß in [mN*m/m]. Der auf das Papiergewicht bezogene Index hat die Dimension [mN*m²/g] und liegt zwischen 5.0 und 20. Die relativ geringe Reißfestigkeit des Trägerpapieres für den RFID-Transponder im Vergleich zur Haftung der ersten Kleberschicht auf den zu kennzeichnenden Gegenstand hat zur Folge, daß beim Versuch des Ablösens des Sicherheitsetiketts von dem damit gekennzeichneten Gegenstand oder beim Auseinanderziehen zusammengefügter streifenförmiger Sicherheitsanhänger das Trägerpapier verformt wird und/oder einreißt und entweder die Antenne oder die Verbindungen zwischen Antenne und Chip zerstört werden, so daß der RFID-Transponder funktionsunfähig wird.

Die gewünschte Reißfestigkeit der für die erfindungsgemäße Trägerschicht geeigneten Papiere bzw. deren Festigkeitsindex kann durch die Mahlung der Cellulosefasern und Masseleimung und/oder Oberflächenleimung des Papiers eingestellt werden.

Die gleiche irreversible Dehnung oder Reißen tritt bei streifenförmigen Sicherheitsanhängern auf, wenn versucht wird, die miteinander durch die Kleberschicht verbundenen Enden der Anhängerschlaufe wieder voneinander zu lösen.

Bei den Ausführungsformen des laminierten Sicherheitsetiketts oder des laminierten Sicherheitsanhängers mit Papier als Trägerschicht ist die Antenne des RFID-Transponders vorzugsweise auf der mit der ersten Kleberschicht in Kontakt stehenden Oberfläche der Trägerschicht ausgebildet und auch der damit in elektrischer Verbindung stehende Chip auf dieser Oberfläche angeordnet.

Bei einer anderen Ausführungsform der Erfindung ist die bedruckbare Oberfläche durch eine zusätzliche, mit der Trägerschicht mittels einer zweiten Kleberschicht verklebte Deckschicht ausgebildet. Im Bereich des RFID-Transponders ist die Deckschicht nicht vollflächig mit der Trägerschicht verklebt und die mechanische Stabilität der Trägerschicht ist in den nicht mit der Deckschicht verklebten Teilflächen durch Schnitt- oder Stanzlinien verringert. Träger- und Deckschicht können jedoch auch vollflächig miteinander verklebt sein. Durch Aufbringen unterschiedlicher Klebermengen ergeben sich unterschiedliche Verbundhaftungen. Beispielsweise ist die Verbundhaftung zwischen Trägerund Deckschicht im Bereich des RFID-Transponders wesentlich geringer als in umgebenden Bereichen und die mechanische Stabilität der Trägerschicht ist entlang der schwächer haftenden Bereiche durch Schnitt- und Stanzlinien verringert.

Vorzugsweise ist die Kohäsion der ersten Kleberschicht kleiner als die Kohäsion der zweiten Kleberschicht.
Vorzugsweise ist die Adhäsion der zweiten Kleberschicht an der Trägerschicht und/oder der Deckschicht größer als die Adhäsion der ersten Kleberschicht an der Trägerschicht und/oder am damit gekennzeichneten Gegenstand. Bevorzugt tritt Adhäsionsbruch auf

Die unterschiedliche Kohäsion und Adhäsion der Kleberschichten hat zur Folge, daß beim Versuch des Ablösens des Sicherheitsetiketts von einem damit gekennzeichneten Gegenstand oder beim Auseinanderziehen der zusammengefügten Endbereiche eines Sicherheitsanhängers eine Auftrennung des mehrschichtigen Laminats im Bereich der ersten Kleberschicht erfolgt. Die im Bereich des RFID-Transponders zumindest teilweise fehlende, zweite Kleberschicht führen dazu, daß die Haftung der ersten Kleberschicht an den damit gekennzeichneten Gegenständen oder die Haftung der zusammengeführten Endbereiche eines Sicherheitsanhängers ausreichend ist, daß beim Trennversuch zumindest Teile der Trägerschicht nicht abgelöst werden und auf dem gekennzeichneten Gegenstand verbleiben. Die Trennung erfolgt zwischen Träger- und Deckschicht in der Ebene der zweiten Kleberschicht in Bereichen ohne Kleber, wobei die Trägerschicht insbesondere an Schnitten- oder Stanzlinien weiter reißt, so daß Antennenleiterbahnen und/oder die elektrische Verbindung der Antenne mit dem Chip aufgetrennt werden. Dies bedingt Funktionsunfähigkeit des RFID-Transponders.

Die unterschiedliche Adhäsion und Kohäsion der ersten und zweiten Kleberschichten an den jeweils benachbarten Schichten, d. h. Deckschicht, Trägerschicht, mit Etikett gekennzeichneter Gegenstand, hat zur Folge, daß beim Versuch des Ablösens vom gekennzeichneten Gegenstand die Trägerschicht verformt wird und/oder einreißt.

Bei anderen Ausführungsformen kann die Adhäsion der ersten Kleberschicht an der Gegenstandsoberfläche und/oder der Trägerschicht größer als die Adhäsion der zweiten Kleberschicht an der Trägerschicht und/oder der Deckschicht, um beim unbefugten Ablösen des Etiketts von der damit gekennzeichneten Oberfläche die gewünschte Delaminierung des Laminats und Verformung der Trägerschicht zu erreichen. Bevorzugt tritt Adhäsionsbruch auf.

Bei den erfindungsgemäßen Etiketten oder Anhängern mit einer Deckschicht kann die Antenne des RFID-Transponders entweder auf der mit der ersten Kleberschicht in Kontakt stehenden Oberfläche der Trägerschicht oder auf der mit der zweiten Kleberschicht in Kontakt stehenden Oberfläche der Trägerschicht, gegebenenfalls sogar auf beiden Oberflächen der Trägerschicht angeordnet sein. Der damit elektrisch verbundene Chip kann entweder auf der gleichen Oberfläche wie die Antenne oder auf der gegenüberliegenden Oberfläche der Trägerschicht angeordnet sein.

Um das erfindungsgemäße Sicherheitsetikett auch als Vignette zum Kennzeichnen von Kraftfahrzeugen und/oder Zutrittsberechtigungskarten verwenden zu können, kann im Laminat zusätzlich eine Polymerfolie vorhanden sein, mit einer inneren Oberfläche, die in Kontakt mit der ersten Kleberschicht steht und mit einer äußeren Oberfläche. Auf der äußeren Oberfläche ist eine dritte Kleberschicht aus einem Haftkleber vorhanden, auf deren offener Oberfläche eine abziehbare Abdeckung angeordnet ist. Die Adhäsion der dritten Kleberschicht an der gekennzeichneten Oberfläche ist größer als die Kohäsion von erster und/oder zweiter Kleberschicht an den jeweils benachbarten Schichten, so daß beim Versuch, daß aufgeklebte Sicherheitsetikett oder die Vignette von dem zu kennzeichnenden Gegenstand, vorzugsweise Kraftfahrzeugen und Zutrittsberechtigungsscheinen in und/oder an der ersten oder zweiten Kleberschicht delaminiert und aufgrund der geringeren mechanischen Festigkeit der Trägerschicht im Bereich des RFID-Transponders dieser so verformt oder zerrissen wird, daß der RFID-Transponder funktionsunfähig wird. Bevorzugt tritt Adhäsionsbruch auf.

Alternativ kann bei einem Laminat mit der zusätzlichen Polymerfolie und dritter Kleberschicht aus einem Haftkleber die Adhäsion der dritten Kleberschicht an benachbarten Schichten kleiner sein als die Adhäsion der ersten und/oder zweiten Kleberschicht an benachbarten Schichten, die Kohäsion der dritten Kleberschicht, bzw. deren Adhäsion an mindestens einer der benachbarten Schichten muß jedoch größer sein als die Kohäsion bzw. die Adhäsion der zweiten Kleberschicht an mindestens einer benachbarten Schicht, um sicherzustellen, daß beim Versuch des Ablösens die Laminatstruktur durch Delaminieren soweit zerstört wird, daß der RFID-Transponder funktionsunfähig wird. Bevorzugt tritt Adhäsionsbruch auf.

Vorzugsweise ist die erste Kleberschicht eine Haftkleberschicht, auf deren offener Oberfläche eine abziehbare Abdeckung angeordnet ist. Bei Anwesenheit der zusätzlichen Polymerfolie kann die erste Kleberschicht auch ein Kaschierkleber sein.

Im Falle eines Sicherheitsanhängers kann die erste Kleberschicht auch als eine kaltsiegelnde Kleberschicht ausgebildet sein.

Die zweite Kleberschicht des Laminataufbaues kann eine Kaschierkleberschicht oder eine Heißschmelzkleberschicht sein.

Bei Ausführungsformen mit dritter Kleberschicht ist diese eine Haftkleberschicht, auf deren offener Oberfläche eine abziehbare Abdeckung angeordnet ist und die erste und zweite Kleberschicht können Kaschierkleberschichten oder Heißschmelzschichten sein.

Bei Ausführungsformen des erfindungsgemäßen Sicherheitsetikettes oder des Sicherheitsanhängers mit Deckschicht kann der Chip des RFID-Transponders auf der mit der zweiten Kleberschicht in Kontakt stehenden Oberfläche der Trägerschicht befestigt sein und die der Deckschicht zugewandte Oberfläche des Chips mittels eines Klebers von sehr hoher Klebkraft und Kohäsion mit der Deckschicht verklebt sein. Beim Versuch des Entfernen des Sicherheitsetiketts von dem damit gekennzeichneten Gegenstand oder Auftrennen eines schlaufenförmigen, zusammengefügten Sicherheitsanhängers wird der Chip zusammen mit der Deckschicht von der Trägerschicht abgelöst und damit die Verbindung mit der Antenne unterbrochen. Dies führt zur Funktionsunfähigkeit des RFID-Transponders.

Die Deckschicht in den erfindungsgemäß laminierten Sicherheitsetiketten oder Sicherheitsanhängern ist vorzugsweise ein Papier mit mindestens einer gut bedruckbaren Oberfläche. Die Bedruckbarkeit kann dadurch verbessert sein, daß das Papier mit einer geeigneten Oberflächenleimung oder zumindestens eine Seite mit einer anorganisches Pigment und Bindemittel enthaltenden Beschichtung versehen ist.

Derartige Papiere mit einem Flächengewicht von 40 g/m² bis 250 g/m² sind kommerziell erhältlich. Im Falle von Sicherheitsanhängern kann die Deckschicht auch ein mit synthetischen Fasern verstärktes Papier sein.

Grundsätzlich kann die Deckschicht auch eine Polymerfolie sein mit mindestens einer gut bedruckbar ausgerüsteten Oberfläche.

Die bei bestimmten Ausführungsformen vorhandene, zusätzliche Polymerfolie kann eine Polyesterfolie (Polyethylenterephthalat, Polybutylenterephthalat), Polyolefinfolie, insbesondere Polyethylenfolie oder Polypropylenfolie, Folie auf Acrylatbasis, Polyamidfolie, Polycarbonatfolie oder Polyvinylchlorid-folie sein.

Diese Folie hat vorzugsweise eine Dicke von 20 µm bis 250 µm. Die Polymerfolie weist einen E-Modul (Young's Modul) gemessen nach DIN 53455 (ISO-R 527) von 0.1 bis 4.0 GPa auf. Die Weiterreißfestigkeit (längs bzw. quer) gemessen nach DIN 53363 kann zwischen 0.10 und 150 N betragen. Der Weiterreißwiderstand (längs bzw. quer) wird bei Folien auf die Dicke bezogen [N/mm] und kann von 10 bis 500 N/mm betragen.

Die Kleberschichten können ein Flächengewicht von 3 g/m² bis 30 g/m², vorzugsweise von 5 g/m² bis 15 g/m² haben. Die zweite und bei bestimmten Ausführungsformen auch die erste Kleberschicht kann aus handelsüblichen Heißschmelzklebern oder üblichen Kaschierklebern ausgebildet sein.

Die erste Kleberschicht und die dritte Kleberschicht sind vorzugsweise Haftkleber, beispielsweise haftklebende, wässrige Dispersionen auf Basis Acrylsäure, Acrylat (Ester mit C₁ bis C₈-Alkoholen), Methacrysäure, Methacrylat (Ester mit C₁ bis C₈-Alkoholen) und deren Copolymeren mit Vinylacetat, Acrylnitril wie Acetoacrylamid und/oder quervernetzte Comonomere, (z.B. Divinylbenzol oder Ethylendimethacrylat) mit und ohne modifizierende Harzdispersionen (Kohlenwasserstoffharze, Alkylvinylharze. Terpenphenolharze, Beta-pinenharze, Collodiumharze, Methylstyrol-Vinyltoluolharze), Acrylhaftkleber gelöst in organischen Lösungsmitteln mit z.B. Kollophonium- Triglycerid- oder hydrierten Kollophoniumharzen als klebrigmachende Komponente, durch Copolymerisation mit bifunktionellen Monomeren wie Diphenylbenzol oder Ethylendimethacrylat oder Copolymerisation mit UV-Photoinitiatoren (z.B. Benzophenongruppen) derivatisierte Acrylate, strahlenvernetzbare Haftschmelzkleber auf Acrylatbasis, Haftschmelzkleber auf Basis Isobutylen-Isopren, Isobutylen-Butadien oder Blockcopolymere mit Styrol(z.B. SIS-SB-,SBS und SE/BS-Copolymere) unter Zusatz klebrigmachender Harze, z.B. aliphatische Olefinharze, Kollophonium- oder Terpen-Phenolharze oder Polyaromate, in Benzin gelöste Haftkleber auf Naturkautschukbasis mit Cumaron-Inden, Kollophonium- oder Kohlenwasserstoffharzen (z.B. Polyterpene oder Polybeta-pinen) als Klebrigmacher.

Die Haftkleberschicht wird zur Handhabung vor Gebrauch mit einer ablösbaren Abdeckung versehen. Derartig ablösbare Abdeckungen können sogenannte Trennpapiere sein, das sind Papiere, die mindestens eine so ausgerüstete Oberfläche aufweisen, daß bei Kontakt mit dem Haftkleber eine Verbindung ausgebildet wird, die jedoch ohne Beeinträchtigung der Klebwirkung der Haftkleberschicht wieder lösbar ist.

Geeignete Trennpapiere sind solche mit einer Oberflächenschicht auf der Vorderseite, die als Trennmittel enthalten kann: Polymere auf der Basis von Celluloseacetat, (Meth)acrylaten, Acrylnitril, Vinylchlorid, Vinylethern oder deren Copolymeren mit z.B. Maleinsäureanhydrid oder modifiziert mit Aldehyd- oder Iminharzen, Wachse auf der Basis von Polyethylen- oder Polyamin bzw. deren Mischungen mit Polymeren auf der Basis von Nitrozellulose, Polystyrol oder Vinylchlorid-Vinylacetatcopolymere, Vinylester mit langkettigen Alkoholen, Metallstearaten und darauf basierenden Derivaten, vernetzten Polyorganosiloxanen, gegebenenfalls in Mischung mit Vinylethern und/oder Maleinsäureanhydridpolymeren.

Silikonhaltige Adhäsivschichten oder Trennschichten werden aus Lösungen organischer Lösemittel oder aus wässriger Emulsion oder als flüssige Polyorganosiloxane auf ein geeignetes Trägermaterial aufgebracht und anschließend vernetzt. Die Vernetzung kann durch katalysierte Kondensation, durch Additionsreaktion wie Hydrosylilierung oder mittels UV- oder ESH-Strahlen erfolgen.

Bei der Ausführungsform der Erfindung als Sicherheitsanhänger kann die erste Kleberschicht auch eine Kaltsiegelkleberschicht sein, die in mindestens zwei in Abstand voneinander angeordneten Bereichen auf der Oberfläche der Trägerschicht angeordnet ist, so daß das Anhängeetikett an dem zu kennzeichnenden Produkt durch Umschlingen zumindest eines Teils angebracht werden kann und die beiden Bereiche mit Kaltsiegelkleber aufeinandertreffen und sich gegenseitig versiegeln.

Der RFID-Transponder mit Antenne wird in einem Endbereich des streifenförmigen Anhängers angeordnet, so daß er in dem Bereich angeordnet ist, der nach dem Umschlingen mit dem anderen Endbereich gegenseitig versiegelt wird.

Da die Kaltsiegelkleberschicht nur gegen sich selbst siegelt und gegenüber der anderen Oberfläche der Trägerschicht blockfrei ist, kann der Kaltsiegelkleber auch auf der gesamten Oberfläche der Trägerschicht aufgebracht werden, ohne daß das anhängende Etikett beim Anbringen am zu kennzeichnenden Produkt selbst anklebt.

Es können für diese Ausführungsform bekannte, im wesentlichen blockfreie Kaltsiegelkleber verwendet werden. Kaltsiegelkleber und deren Eigenschaften sind z.B. beschrieben von L. Placzek in Coating, 18(4), Seiten 94-95, 1905. Der Hauptanteil vieler gängiger Kaltsiegelkleber ist ein Naturlatex in Kombination mit einem plastischen Polymer und weiteren üblichen Zusatzstoffen, wie klebrigmachenden Harzen, anorganischen Antiblockmitteln wie Kieselsäure, Stabilisatoren und Netzmitteln.

Eine solche typische Zusammensetzung enthält 55-60 Gew.% einer Naturlatexemulsion mit hohem Ammoniakgehalt, 30-40 Gew.% einer Styrol-Acrylatemulsion und kleine Mengen von Benetzungsmitteln, Latexstabilisatoren, Antioxidantien, Bioziden und Verdickungsmitteln.

Weitere Kaltsiegelkleber insbesondere auf der Basis wäßriger Polyacrylatdispersionen sind in den US-A-5,070,164, US-A-4,898,787 und US-A-4,888,395 beschrieben.
Ein besonders geeigneter Kaltsiegelkleber auf der Basis einer wäßrigen Acrylatcopolymerdispersion bzw. -lösung welche hergestellt wird durch Emulsionspolymerisation von Alkylestern der Acrylsäure und der Methacrylsäure und von α,β-ethylenisch ungesättigten Carbonsäuren ist in DE-A-43 41 815 offenbart.
In EP-B-338 304 ist ein weiterer synthetischer Kaltsiegelkleber beschrieben, der zur Verwendung in dieser Ausführungsform der vorliegenden Erfindung besonders geeignet ist. Diese Kaltsiegelklebstoffzusammensetzung enthält 45-70 Gew.% eines synthetischen Basispolymeren und 30-55 Gew.% eines synthetischen, sekundären Polymeren, wobei das Basispolymer ein Polymer, ein Copolymer und eine Mischung davon umfaßt, ausgewählt aus der Gruppe aus Acrylpolymeren und Styrol-Butadienkautschuken und das sekundäre Polymer ein Styrol-Acrylpolymer, ein synthetisches Styrol-Acrylharz oder eine Mischung davon oder eine Mischung aus einem oder mehreren Styrol-Acrylpolymeren oder Styrol-Acrylharzen oder irgendeine Mischung davon mit einem oder mehreren synthetischen Polymeren, Copolymeren oder synthetischen Harzen umfaßt.

Der Kaltsiegelkleber wird vorzugsweise mit einem Auftragsgewicht von 3 g/m² bis 20 g/m² besonders bevorzugt in Mengen von 8-15 g/m² aufgebracht.
Für den Fall, daß die der ersten Kleberschicht gegenüberliegende Oberfläche der Trägerschicht oder die freie Oberfläche der Deckschicht eine unerwünschte Blockwirkung mit der Kaltsiegelkleberschicht aufweisen Blockneigung gegenüber dem Kaltsiegelkleber haben sollte, kann die Oberfläche mittels geeigneten Antiblockmitteln ausgerüstet werden.

Geeignete organische Mittel, um das Blocken mit dem Kaltsiegelkleber in aufgerolltem Zustand zu verhindern und gleichzeitig die Bedruckbarkeit nicht zu beeinträchtigen sind beispielsweise Polyamide, Polyamidwachse wie Octodecanamid, Bis-Stearoylethylendiamid, Montanwachse, Polyolefinwachse wie Polyethylenwachse mit einem Schmelzpunkt von 50°C bis 60°C in Form anionisch stabilisierter wäßriger Dispersionen mit einem pH-Wert von 7-9, Esterwachse z.B. Octadecylstearat, Calciumstearat, Zinkstearat, Poly(meth)acrylate mit Alkylseitenketten mit 16--20 Kohlenstoffatomen, z.B. Octadecylacrylat und deren Copolymere mit Acrylsäure, Polyvinylester, z.B. Vinylstearat, Vinylpalmitat, Vinylarachidat, Vinylbehenat, gegebenenfalls in Kombination mit Vinylalkohol und/oder Polyvinylacetat.

Geeignete Formulierungen zum Ausrüsten der Oberflächen mit Antiblockmittel, um Blocken mit Kaltsiegelkleber zu vermeiden sind im Handbook of Pressure Sensitive Adhesive Technology, herausgegeben von Don Sathas, beschrieben.

Vorzugsweise werden die Sicherheitsetiketten oder Sicherheitsanhänger als ein durchgehendes Band mit einer Vielzahl von Etiketten oder Anhängern ausgebildet. Um das Abtrennen von Einzeletiketten oder Anhängern vom Band zu erleichtern, kann das durchgehende Band zwischen den Etiketten quer zur Bandlaufrichtung vorbereitete Trennlinien, beispielsweise Perforierungen aufweisen. Die vorbereiteten Trennlinien sollen sichtbar sein, um das passergenaue Einstellen von Etiketten und Anhängern beim Bedrucken zu erleichtern. Die Etiketten in Bandform können als Rollen oder in Zick-Zack-Faltung konfektioniert sein, mit jeweils bis zu 200 oder mehr Einzeletiketten oder Anhängern.

Bei Ausführungsformen mit Kaltsiegelkleberschicht als erster Kleberschicht werden diese nur in Rollenform konfektioniert.

Die Erfindung soll nun anhand einiger Zeichnungen weiter veranschaulicht werden.

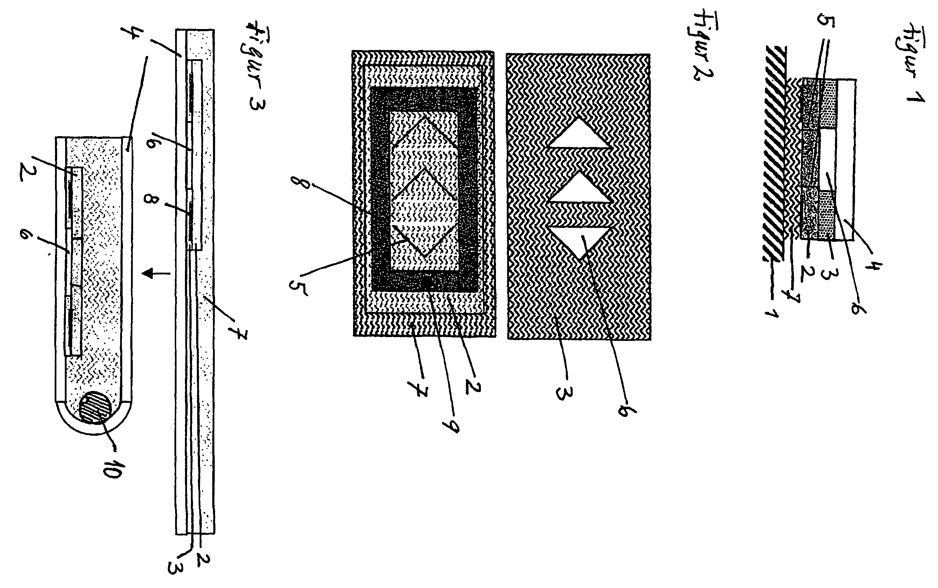

Figur 1 zeigt im Schnitt eine Ausführungsform eines Sicherheitsetiketts, das auf einem zu kennzeichnenden Gegenstand (1) mittels der ersten Kleberschicht (7) befestigt ist. Die Trägerschicht (2) und Haftkleberschicht (7) weisen im Bereich des nur schematisch angedeuteten RFID-Transponders durch die Trägerschicht und die Haftkleberschicht hindurchgehende Schnitte (5) auf, um die mechanische Stabilität der Trägerschicht in diesem Bereich zu verringern. Die Oberseite der Trägerschicht (2) ist mittels der zweiten Kleberschicht (3) nicht vollflächig mit der Deckschicht (4) verklebt. Die klebstofffreien Bereiche im Bereich eines RFID-Transponders sind mit (6) gekennzeichnet.

Abbildung 2 zeigt eine Ausführungsform von klebstofffreien Bereichen (6) in der zweiten Kleberschicht (3) und darunter die Anordnung des RFID-Transponders mit Antenne (8) und Chip (9) auf der Trägerschicht (2) und schematisch angedeutet darunter die erste Kleberschicht (7). Durch Schnittlinien (5) ist der Bereich der Trägerschicht innerhalb der Antenne (8) des RFID-Transponders in ihrer mechanischen Stabilität verringert.

Figur 3 zeigt im Schnitt einen streifenförmigen Sicherheitsanhänger mit Trägerschicht (2) für den RFID-Transponder (8), mit erster Kleberschicht (7) und der Deckschicht (4), die im Bereich des RFID-Transponders mit der zweiten Kleberschicht (3) mit der Trägerschicht verklebt ist. Diese Verklebung ist nicht vollflächig, sondern weist klebstofffreie Bereiche in (6) in der Ebene der zweiten Kleberschicht (3) auf. Im darunterliegenden Teil der Figur (3) ist der zusammengefügte Anhänger wiedergegeben, dessen rechter Teil als Schlaufe um den Griff (10) eines Gepäckstückes geschlungen ist.

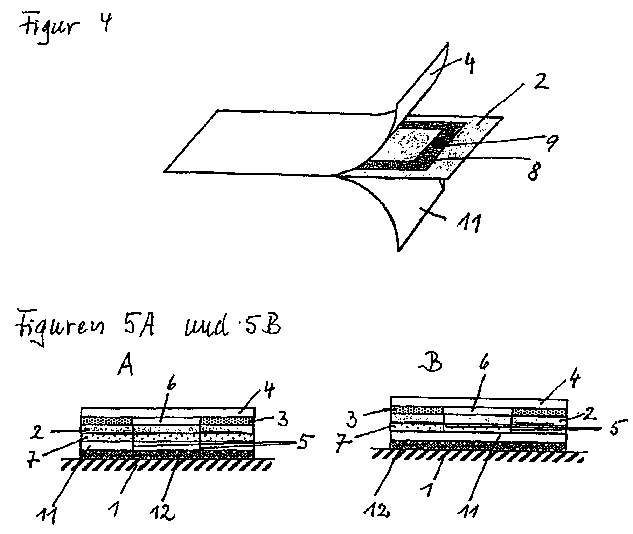

Figur 4 zeigt schematisch den Aufbau einer weiteren Ausführungsform des laminierten Sicherheitsetikettes mit Trägerschicht (2), dem darauf ausgebildeten RFID-Transponder mit Antenne (8) und Chip (9), der Deckschicht (4) und der auf der gegenüberliegenden Seite der Trägerschicht (2) angeordneten zusätzlichen Polymerfolie (11).

Bei dieser Darstellung sind die Klebstoffschichten nicht wiedergegeben.

In Figuren 5A und 5B ist der in Figur 4 schematisch wiedergegebene Aufbau des Laminats im Schnitt wiedergegeben. Mit (1) ist der zu kennzeichnende Gegenstand bezeichnet. Die Trägerschicht (2) ist mittels der zweiten Kleberschicht (3) mit der Deckschicht nicht vollflächig verklebt, bzw. weist in Teilbereichen eine wesentlich schlechtere Verbundhaftung zwischen Träger- und Deckschicht auf. Die klebstofffreien Bereiche im Bereich des RFID-Transponders nicht vollflächig verklebt. Die klebstofffreien Bereiche im Bereich des RFID-Transponders sind mit (6) bezeichnet. Die Trägerschicht (2) ist durch die erste Kleberschicht (7) mit der zusätzlichen Polymerfolie (11) verbunden, deren freie Oberfläche mit der dritten Kleberschicht (12) beschichtet ist.

In Figur 5A ist die Trägerschicht (2) und die zusätzliche Polymerfolie (11) im Bereich des RFID-Transponders durch Schnitte (5) in der mechanischen Stabilität geschwächt.

In Figur 5B reichen diese Schnitte (5) lediglich durch die Trägerschicht (2) und die erste Kleberschicht (7), die mechanische Stabilität der zusätzlichen Polymerfolie (11) ist im Bereich des RFID-Transponders nicht verringert.

Die Erfindung wird nun anhand von Ausführungsbeispielen noch weiter erläutert.

### Beispiel 1:

Ein Transponderband bestehend aus einem 80µm dicken Offset-Papier als Trägermaterial und darauf ausgebildeten mit Silberleitpaste gedruckten Antennen und damit in elektrischer Verbindung stehenden Chips wird mit einem hotmeltbasierenden Haftkleber selbstklebend beschichtet, und mit einem Trennpapier abgedeckt. Es werden Etiketten der Größe 100 × 165 mm² gestanzt.
Das RF-Etikett wird zur Kennzeichnung von Paketen verwendet. Die Adhäsion und Kohäsion des Haftklebers ist so gewählt, daß das Papier beim Entfernen des Etiketts zerreißt, wodurch die Antennenleiterbahnen zerstört werden und der Transponders funktionsunfähig wird.

### Bezugsziffernliste:

- 1: Zu kennzeichnender Gegenstand
- 2: Trägerschicht
- 3: Zweite Kleberschicht
- 4: Deckschicht
- 5: Schnitte in Trägerschicht
- 6: Klebstofffreier Bereich in der Ebene der zweiten Kleberschicht
- 7: Erste Kleberschicht
- 8: Antenne des RFID-Transponders
- 9: Chip
- 10: Griff eines Gepäckstückes
- 11: Zusätzliche Polymerfolie
- 12: Dritte Kleberschicht

## Patentansprüche

1. Mehrschichtiges Sicherheitsetikett mit mindestens einer bedruckbaren Trägerschicht aus Papier mit einem Flächengewicht von 40 g/m² bis 250 g/m² und einer Weiterreißfestigkeit, gemessen nach Brecht-Imset, DIN 53115, von 250 bis 4000 mN, auf der zumindest eine Antenne und ein elektrisch damit verbundener Chip zur Ausbildung eines RFID-Transponders angeordnet sind und wobei auf der der bedruckbaren Oberfläche gegenüberliegenden Oberfläche der Trägerschicht eine erste Kleberschicht ausgebildet ist, deren Haftung auf einem zu kennzeichnenden Gegenstand derart ist, daß die zum Ablösen erforderliche Kraft größer ist als die mechanische Stabilität der Trägerschicht, so daß sich diese beim Versuch des Ablösens vom damit gekennzeichneten Gegenstand irreversibel verformt und dadurch die normale Funktionsfähigkeit des RFID-Transponders gestört und/oder zerstört wird.

2. Mehrschichtiger, streifenförmiger Sicherheitsanhänger mit einer bedruckbaren Trägerschicht aus Papier mit einem Flächengewicht von 40 g/m² bis 250 g/m² und mit einer Weiterreißfestigkeit, gemessen nach Brecht-Imset, DIN 53115, von 250 bis 4000 mN, auf der mindestens eine Antenne und ein elektrisch damit verbundener Chip zur Ausbildung eines RFID-Transponders in einem Endbereich des Trägerstreifens angeordnet sind und wobei auf der der bedruckbaren Oberfläche der Trägerschicht gegenüberliegenden Oberfläche eine erste Kleberschicht ausgebildet ist, deren Haftung mit sich selbst an einer anderen Stelle des Anhängerstreifens derart ist, daß die zum Ablösen erforderliche Kraft größer ist als die mechanische Stabilität der Trägerschicht, so daß sich diese beim Versuch des Ablösens vom damit gekennzeichneten Gegenstand irreversibel verformt und dadurch die normale Funktionsfähigkeit des RFID-Transponders gestört und/oder zerstört wird.

3. Sicherheitsetikett oder Sicherheitsanhänger nach einem der Ansprüche 1 oder 2, **dadurch gekennzeichnet, daß** die Antenne des RFID-Transponders auf der mit der ersten Kleberschicht in Kontakt stehenden Oberfläche der Trägerschicht ausgebildet ist und auch der damit in elektrischer Verbindung stehende Chip auf dieser Oberfläche angeordnet ist.

4. Sicherheitsetikett oder Sicherheitsanhänger nach einem der Ansprüche 1 bis 3, **dadurch gekennzeichnet, daß** die bedruckbare Oberfläche durch eine zusätzliche, mit der Trägerschicht mittels einer zweiten Kleberschicht verklebte Deckschicht ausgebildet ist, im Bereich des RFID-Transponders die Verbundhaftung zwischen der Deckschicht und der Trägerschicht geringer ist als in der Umgebung und die mechanische Stabilität der Trägerschicht in den Teilflächen mit verringerter Verbundhaftung mit der Deckschicht durch Schnitt- oder Stanzlinien verringert ist.

5. Sicherheitsetikett oder Sicherheitsanhänger nach Anspruch 4, **dadurch gekennzeichnet, daß** die Kohäsion der ersten Kleberschicht kleiner oder gleich ist wie die Kohäsion der zweiten Kleberschicht.

6. Sicherheitsetikett oder Sicherheitsanhänger nach Anspruch 4, **dadurch gekennzeichnet, daß** die Adhäsion der zweiten Kleberschicht an der Trägerschicht und/oder der Deckschicht größer ist wie die Adhäsion der ersten Kleberschicht an der Trägerschicht und/oder am damit gekennzeichneten Gegenstand.

7. Sicherheitsetikett oder Sicherheitsanhänger nach einem der Ansprüche 4 bis 6, **dadurch gekennzeichnet, daß** die Antenne des RFID-Transponders entweder auf der mit der ersten Kleberschicht in Kontakt stehenden Oberfläche der Trägerschicht oder auf der mit der zweiten Kleberschicht in Kontakt stehenden Oberfläche der Trägerschicht oder auf beiden Oberflächen der Trägerschicht angeordnet ist und der damit elektrisch verbundene Chip entweder auf der gleichen Oberfläche wie die Antenne oder auf der gegenüberliegenden Oberfläche der Trägerschicht angeordnet ist.

8. Sicherheitsetikett oder Sicherheitsanhänger nach einem der Ansprüche 1 oder 2, **dadurch gekennzeichnet**, daB die bedruckbare Oberfläche durch eine zusätzliche, mit der Trägerschicht mittels einer zweiten Kleberschicht verklebte Deckschicht ausgebildet ist und keine erste Kleberschicht im Bereich des Chips oder eines anderen Teilbereiches des RFID-Transponders vorhanden ist und zumindest die mechanische Stabilität der Trägerschicht in den Teilflächen ohne erste Kleberschicht durch Schnitt- oder Stanzlinien verringert ist.

9. Sicherheitsetikett oder Sicherheitsanhänger nach Anspruch 8, **dadurch gekennzeichnet, daß** die Kohäsion der ersten Kleberschicht kleiner oder gleich ist als die Kohäsion der zweiten Kleberschicht.

10. Sicherheitsetikett oder Sicherheitsanhänger nach Anspruch 8, **dadurch gekennzeichnet, daß** die Adhäsion der zweiten Kleberschicht an der Trägerschicht und/oder der Deckschicht kleiner ist als die Adhäsion der ersten Kleberschicht an der Trägerschicht und/oder am damit gekennzeichneten Gegenstand.

11. Sicherheitsetikett oder Sicherheitsanhänger nach einem der Ansprüche 8 bis 10, **dadurch gekennzeichnet, daß** die Antenne des RFID-Transponders entweder auf der mit der ersten Kleberschicht in Kontakt stehenden Oberfläche der Trägerschicht oder auf der mit der zweiten Kleberschicht in Kontakt stehenden Oberfläche der Trägerschicht oder auf beiden Oberflächen der Trägerschicht angeordnet ist und der damit elektrisch verbundene Chip entweder auf der gleichen Oberfläche wie die Antenne oder auf der gegenüberliegenden Oberfläche der Trägerschicht angeordnet ist.

12. Sicherheitsetikett oder Sicherheitsanhänger nach einem der Ansprüche 3 bis 11, **dadurch gekennzeichnet, daß** zusätzlich eine Polymerfolie mit einer inneren Oberfläche, die in Kontakt mit der ersten Kleberschicht steht und mit einer äußeren Oberfläche vorhanden ist und auf der äußeren Oberfläche eine dritte Kleberschicht aus einem Haftkleber vorhanden ist, auf deren offener Oberfläche eine abziehbare Abdeckung angeordnet ist, wobei die Kohäsion der dritten Kleberschicht bzw. die Adhäsion der dritten Kleberschicht an mindestens einer der benachbarten Schichten größer ist als die Kohäsion der ersten und/oder zweiten Kleberschicht, bzw die Adhäsion der ersten und/oder zweiten Kleberschicht an mindestens einer der jeweils benachbarten Schichten.

13. Sicherheitsetikett oder Sicherheitsanhänger nach einem der Ansprüche 3 bis 11, **dadurch gekennzeichnet, daß** zusätzlich eine Polymerfolie mit einer inneren Oberfläche, die in Kontakt mit der ersten Kleberschicht steht und mit einer äußeren Oberfläche vorhanden ist und auf der äußeren Oberfläche eine dritte Kleberschicht aus einem Haftkleber vorhanden ist, auf deren offener Oberfläche eine abziehbare Abdeckung angeordnet ist, wobei die Kohäsion der dritten Kleberschicht kleiner ist als die Kohäsion der ersten Kleberschicht und größer ist als die der zweiten Kleberschicht, bzw. die Adhäsion der dritten Kleberschicht an der benachbarten Polymerfolie kleiner ist, als die Adhäsion der ersten Kleberschicht an mindestens einer benachbarten Schicht, und größer ist als die Adhäsion der zweiten Kleberschicht an mindestens einer benachbarten Schicht.

14. Sicherheitsetikett oder Sicherheitsanhänger nach einem der Ansprüche 1, 3 bis 6, **dadurch gekennzeichnet, daß** die erste Kleberschicht eine Haftkleberschicht ist, auf deren offener Oberfläche eine abziehbare Abdeckung angeordnet ist.

15. Sicherheitsanhänger nach einem der Ansprüche 2 bis 6, **dadurch gekennzeichnet, daß** die erste Kleberschicht eine kaltsiegelnde Kleberschicht ist.

16. Sicherheitsetikett oder Sicherheitsanhänger nach einem der Ansprüche 4 bis 10, **dadurch gekennzeichnet, daß** die zweite Kleberschicht eine Kaschierkleberschicht oder eine Heißschmelzkleberschicht ist.

17. Sicherheitsetikett oder Sicherheitsanhänger nach einem der Ansprüche 7 oder 8, **dadurch gekennzeichnet, daß** die erste und/oder zweite Kleberschicht eine Kaschierkleberschicht oder Heißschmelzkleberschicht ist und die dritte Kleberschicht eine Haftkleberschicht ist, auf deren offener Oberfläche eine abziehbare Abdeckung vorhanden ist.

18. Sicherheitsetikett oder Sicherheitsanhänger nach einem der Ansprüche 4 bis 12, **dadurch gekennzeichnet, daß** der Chip des RFID-Transponders auf der mit der zweiten Kleberschicht in Kontakt stehenden Oberfläche der Trägerschicht befestigt ist und die der Deckschicht zugewandte Oberfläche des Chips mittels eines Klebers von sehr hoher Klebkraft und Kohäsion mit der Deckschicht verklebt ist, so daß beim Versuch des Entfernen des Sicherheitsetiketts von dem damit gekennzeichneten Gegenstand der Chip zusammen mit der Deckschicht von der Trägerschicht abgelöst und die elektrische Verbindung mit der Antenne unterbrochen wird.

19. Verwendung des Sicherheitsetiketts nach einem der Ansprüche 7 bis 13 als Vignette zur Kennzeichnung von Kraftfahrzeugen und Zutrittsberechtigungskarten.

## Claims

1. A multilayer security label with at least one imprintable backing layer of paper having an area weight from 40 g/m² to 250 g/m² and a tear strength measured according to Brecht-Imset in accordance with DIN 53115 from 250 to 4000 mN, on which at least one antenna and a chip electrically connected to said antenna are arranged for the purpose of forming an RFID transponder and wherein on the surface of the backing layer situated opposite the imprintable surface a first adhesive layer is formed, the adhesion of which on an object to be labelled is such that the force required for detachment is greater than the mechanical stability of the backing layer, so that the latter is irreversibly deformed in the event of an attempt at detachment from the object labelled therewith and thereby the normal functionality of the RFID transponder is disrupted and/or destroyed.

2. A multilayer strip-shaped security tag with an imprintable strip-shaped backing layer of paper having an area weight from 40 g/m² to 250 g/m² and a tear strength measured according to Brecht-Imset in accordance with DIN 53115 from 250 to 4000 mN, on which at least one antenna and a chip electrically connected to said chip are arranged for the purpose of forming an RFID transponder in an end region of the backing strip and wherein on the surface of the backing strip situated opposite the imprintable surface a first adhesive layer is formed, the adhesion of which to itself at another point on the tag strip is such that the force required for disconnecting the ends of the tag strip which are connected by the first adhesive layer is greater than the mechanical stability of the backing layer, so that the latter is irreversibly deformed in the event of an attempt at detachment from the object labelled therewith and thereby the normal functionality of the RFID transponder is disrupted and/or destroyed.

3. Security label or security tag according to one of claims 1 or 2, **characterized in that** the antenna of the RFID transponder is formed on the surface of the backing layer that is in contact with the first adhesive layer, and the chip which is electrically connected thereto is also arranged on this surface.

4. Security label or security tag according to one of claims 1 to 3, **characterized in that** the imprintable surface is formed by an additional covering layer which is adhesion-bonded to the backing layer by means of a second adhesive layer, in the region of the RFID transponder the interlayer adhesion between the covering layer and the backing layer is less than in the surrounding region, and the mechanical stability of the backing layer in the subareas with diminished interlayer adhesion to the covering layer is diminished by cut or punched lines.

5. Security label or security tag according to claim 4, **characterized in that** the cohesion of the first adhesive layer is less than or the same as the cohesion of the second adhesive layer.

6. Security label or security tag according to claim 4, **characterized in that** the cohesion of the second adhesive layer on the backing layer and/or on the covering layer is greater than the adhesion of the first adhesive layer on the backing layer and/or on the object labelled therewith.

7. Security label or security tag according to one of claims 4 to 6, **characterized in that** the antenna of the RFID transponder is arranged either on the surface of the backing layer that is in contact with the first adhesive layer or on the surface of the backing layer that is in contact with the second adhesive layer or on both surfaces of the backing layer, and the chip which is electrically connected thereto is arranged either on the same surface as the antenna or on the opposite surface of the backing layer.

8. Security label or security tag according to one of claims 1 or 2, **characterized in that** the imprintable surface is formed by an additional covering layer which is adhesion-bonded to the backing layer by means of a second adhesive layer, and no first adhesive layer is present in the region of the chip or of another subregion of the RFID transponder, and at least the mechanical stability of the backing layer in the subareas without first adhesive layer is diminished by cut or punched lines.

9. Security label or security tag according to claim 8, **characterized in that** the cohesion of the first adhesive layer is less than or equal to the cohesion of the second adhesive layer.

10. Security label or security tag according to claim 8, **characterized in that** the adhesion of the second adhesive layer on the backing layer and/or on the covering layer is less than the adhesion of the first adhesive layer on the backing layer and/or on the object labelled therewith.

11. Security label or security tag according to one of claims 8 to 10, **characterized in that** the antenna of the RFID transponder is arranged either on the surface of the backing layer that is in contact with the first adhesive layer or on the surface of the backing layer that is in contact with the second adhesive layer or on both surfaces of the backing layer, and the chip which is electrically connected thereto is arranged either on the same surface as the antenna or on the opposite surface of the backing layer.

12. Security label or security tag according to one of claims 3 to 11, **characterized in that** in addition a polymer film having an internal surface which is in contact with the first adhesive layer and having an external surface is present, and on the external surface a third adhesive layer consisting of a contact adhesive is present, on the exposed surface of which a peelable covering is arranged, the cohesion of the third adhesive layer or the adhesion of the third adhesive layer on at least one of the adjacent layers being greater than the cohesion of the first and/or second adhesive layer or the adhesion of the first and/or second adhesive layer on at least one of the respectively adjacent layers.

13. Security label or security tag according to one of claims 3 to 11, **characterized in that** in addition a polymer film having an internal surface which is in contact with the first adhesive layer and having an external surface is present, and on the external surface a third adhesive layer consisting of a contact adhesive is present, on the exposed surface of which a peelable covering is arranged, the cohesion of the third adhesive layer being less than the cohesion of the first adhesive layer and being greater than that of the second adhesive layer, or the adhesion of the third adhesive layer on the adjacent polymer film being less than the adhesion of the first adhesive layer on at least one adjacent layer and being greater than the adhesion of the second adhesive layer on at least one adjacent layer.

14. Security label or security tag according to one of claims 1, 3 to 6, **characterized in that** the first adhesive layer is a layer of contact adhesive, on the exposed surface of which a peelable covering is arranged.

15. Security tag according to one of claims 2 to 6, **characterized in that** the first adhesive layer is a cold-sealing adhesive layer.

16. Security label or security tag according to one of claims 4 to 10, **characterized in that** the second adhesive layer is a layer of laminating adhesive or a layer of hot-melt adhesive.

17. Security label or security tag according to one of claims 7 or 8, **characterized in that** the first and/or second adhesive layer is a layer of laminating adhesive or a layer of hot-melt adhesive and the third adhesive layer is a layer of contact adhesive, on the exposed surface of which a peelabel covering is present.

18. Security label or security tag according to one of claims 4 to 12, **characterized in that** the chip of the RFID transponder is secured to the surface of the backing layer that is in contact with the second adhesive layer, and the surface of the chip facing towards the covering layer is adhesion-bonded to the covering layer by means of an adhesive of very high adhesive strength and cohesion, so that in the event of an attempt at removal of the security label from the object labelled therewith the chip together with the covering layer is detached from the backing layer and the electrical connection to the antenna is interrupted.

19. Use of the security label according to one of claims 7 to 13 as a vignette for the labelling of motor vehicles and access-authorization cards.

## Revendications

1. Etiquette de sécurité multicouche comprenant au moins une couche de support en papier ayant un poids surfacique de 40 g/m² à 250 g/m² et une résistance à la propagation du déchirement de 250 à 4000 mN, mesurée selon Brecht-Imset, DIN 53115, sur laquelle sont disposées au moins une antenne et une puce électriquement reliée à celle-ci pour constituer un transpondeur RFID, une première couche adhésive étant réalisée sur la surface de la feuille polymère opposée à la surface imprimable, dont l'adhésion à un objet à marquer est telle que la force nécessaire au décollage est supérieure à la stabilité mécanique de la couche de support, de sorte que celle-ci est irréversiblement déformée lors de la tentative de décollage depuis l'objet ainsi marqué, ce qui perturbe et/ou détruit la capacité de fonctionnement normale du transpondeur RFID.

2. Attache de sécurité multicouche en forme de bande comprenant une couche de support imprimable en papier ayant un poids surfacique de 40 g/m² à 250 g/m² et une résistance à la propagation du déchirement de 250 à 4000 mN, mesurée selon Brecht-Imset, DIN 53115, sur laquelle sont disposées dans une zone d'extrémité de la bande de support au moins une antenne et une puce électriquement reliée à celle-ci pour constituer un transpondeur RFID, une première couche adhésive étant réalisée sur la surface de la couche de support opposée à la surface imprimable, dont l'adhésion à elle-même à un autre endroit de la bande d'attache est telle que la force nécessaire au décollage est supérieure à la stabilité mécanique de la couche de support, de sorte que celle-ci est irréversiblement déformée lors de la tentative de décollage depuis l'objet ainsi marqué, ce qui perturbe et/ou détruit la capacité de fonctionnement normale du transpondeur RFID.

3. Etiquette de sécurité ou attache de sécurité selon la revendication 1 ou 2, **caractérisée en ce que** l'antenne du transpondeur RFID est formée sur la surface de la couche de support qui est en contact avec la première couche adhésive et **en ce que** la puce électriquement associée à celle-ci est également disposée sur cette surface.

4. Etiquette de sécurité ou attache de sécurité selon l'une des revendications 1 à 3, **caractérisée en ce que** la surface imprimable est formée par une couche de couverture supplémentaire collée sur la couche de support à l'aide d'une deuxième couche adhésive, l'adhésion de liaison entre la couche de couverture et la couche de support dans la zone du transpondeur RFID étant plus faible qu'à la périphérie, et la stabilité mécanique de la couche de support au niveau des portions de surface présentant une adhésion de liaison plus réduite avec la couche de couverture étant réduite par des -lignes de coupe ou de perforations.

5. Etiquette de sécurité ou attache de sécurité selon la revendication 4, **caractérisée en ce que** la cohésion de la première couche adhésive est inférieure ou égale à la cohésion de la deuxième couche adhésive.

6. Etiquette de sécurité ou attache de sécurité selon la revendication 4, **caractérisée en ce que** l'adhésion de la deuxième couche adhésive à la couche de support et/ou à la couche de couverture est supérieure à l'adhésion de la première couche adhésive à la couche de support et/ou à l'objet marqué par ce moyen.

7. Etiquette de sécurité ou attache de sécurité selon l'une des revendications 4 à 6, **caractérisée en ce que** l'antenne du transpondeur RFID est disposée soit sur la surface de la couche de support qui est en contact avec la première couche adhésive, soit sur la surface de la couche de support qui est en contact avec la deuxième couche adhésive, ou encore sur les deux surfaces de la couche de support, et **en ce que** la puce électriquement reliée à celle-ci est disposée soit sur la même surface que l'antenne, soit sur la surface opposée de la couche de support.

8. Etiquette de sécurité ou attache de sécurité selon l'une des revendication 1 ou 2, **caractérisée en ce que** la surface imprimable est formée par une couche de couverture supplémentaire collée sur la couche de support à l'aide d'une deuxième couche adhésive, et **en ce qu'**aucune première couche adhésive n'est présente dans la zone de la puce ou d'une autre portion de surface du transpondeur RFID, et **en ce qu'**au moins la stabilité mécanique de la couche de support sur les portions de surfaces sans première couche adhésive est réduite par des lignes de coupe ou de perforations.

9. Etiquette de sécurité ou attache de sécurité selon la revendication 8, **caractérisée en ce que** la cohésion de la première couche adhésive est inférieure ou égale à la cohésion de la deuxième couche adhésive.

10. Etiquette de sécurité ou attache de sécurité selon la revendication 8, **caractérisée en ce que** l'adhésion de la deuxième couche adhésive à la couche de support et/ou à la couche de couverture est inférieure à l'adhésion de la première couche adhésive à la couche de support et/ou à l'objet marqué par ce moyen.

11. Etiquette de sécurité ou attache de sécurité selon l'une des revendications 8 à 10, **caractérisée en ce que** l'antenne du transpondeur RFID est disposée soit sur la surface de la couche de support qui est en contact avec la première couche adhésive, soit sur la surface de la couche de support qui est en contact avec la deuxième couche adhésive, ou encore sur les deux surfaces de la couche de support, et **en ce que** la puce électriquement reliée à celle-ci est disposée soit sur la même surface que l'antenne, soit sur la surface opposée de la couche de support.

12. Etiquette de sécurité ou attache de sécurité selon l'une des revendications 3 à 11, **caractérisée en ce qu'**elle comporte en outre une feuille polymère présentant une surface intérieure, qui est en contact avec la première couche adhésive et une surface extérieure, et **en ce qu'**une troisième couche adhésive autocollante est présente sur la surface extérieure, sur la surface ouverte de laquelle est disposée une couverture détachable, la cohésion de la troisième couche adhésive, respectivement l'adhésion de la troisième couche adhésive au niveau d'au moins l'une des couches voisines est supérieure à la cohésion de la première et/ou de la deuxième couche adhésive, respectivement à l'adhésion de la première et/ou de la deuxième couche adhésive au niveau d'au moins l'une des couches respectivement voisines.

13. Etiquette de sécurité ou attache de sécurité selon l'une des revendications 3 à 11, **caractérisée en ce qu'**elle comporte en outre une feuille polymère présentant une surface intérieure, qui est en contact avec la première couche adhésive et une surface extérieure, et **en ce qu'**une troisième couche adhésive autocollante est présente sur la surface extérieure, sur la surface ouverte de laquelle est disposée une couverture détachable, la cohésion de la troisième couche adhésive étant inférieure à la cohésion de la première couche adhésive et supérieure à celle de la deuxième couche adhésive, ou bien l'adhésion de la troisième couche adhésive à la feuille polymère voisine étant inférieure à l'adhésion de la première couche adhésive à au moins une couche voisine, et supérieure à l'adhésion de la deuxième couche adhésive à au moins une couche voisine.

14. Etiquette de sécurité ou attache de sécurité selon l'une des revendications 1 et 3 à 6, **caractérisée en ce que** la première couche autocollante est une couche autocollante sur la surface ouverte de laquelle est disposée une couverture détachable.

15. Attache de sécurité selon l'une des revendications 2 à 6, **caractérisée en ce que** la première couche adhésive est une couche adhésive scellant à froid.

16. Etiquette de sécurité ou attache de sécurité selon l'une des revendications 4 à 10, **caractérisée en ce que** la deuxième couche adhésive est une couche adhésive contrecollée ou une couche adhésive thermocollante.

17. Etiquette de sécurité ou attache de sécurité selon la revendication 7 ou 8, **caractérisée en ce que** la première et/ou la deuxième couche adhésive est une couche adhésive contrecollée ou une couche adhésive thermocollante, et **en ce que** la troisième couche adhésive est une couche adhésive autocollante sur la surface ouverte de laquelle est disposée une couverture détachable.

18. Etiquette de sécurité ou attache de sécurité selon l'une des revendications 4 à 12, **caractérisée en ce que** la puce du transpondeur RFID est fixée sur la surface de la couche de support qui est en contact avec la deuxième couche adhésive, et **en ce que** la surface de la puce orientée vers la couche de couverture est collée sur la couche de couverture à l'aide d'une colle à très grand pouvoir d'adhésion et de cohésion, de telle manière que lors de la tentative de retirer l'étiquette de sécurité de l'objet marqué par celle-ci, la puce ainsi que la couche de couverture sont détachées de la couche de support et la liaison électrique avec l'antenne est interrompue.

19. Utilisation de l'étiquette de sécurité selon l'une des revendications 7 à 13 comme vignettes pour marquer des véhicules automobiles et comme cartes d'autorisation d'accès.
